# EUROPEAN PATENT SPECIFICATION

(11) **EP 1 142 967 B1**
(45) Date of publication and mention of the grant of the patent: **24.12.2008**
(21) Application number: 01302696.8
(22) Date of filing: 23.03.2001
(51) Int. Cl.: C09D 11/00, B41J 2/01

(54) **Jet printing ink**
Tintenstrahltinte
Encre pour l'impression par jet

(30) Priority: 30.03.2000 US 539247
(43) Date of publication of application: 10.10.2001
(73) Proprietor: Hewlett-Packard Company, Palo Alto CA 94304-1112 (US)
(72) Inventor: Tyvoll, David, La Jolla, CA 92037 (US); Chen, Xiaohe, San Diego, CA 92129 (US)
(74) Representative: Tollett, Ian

(56) References cited:
- EP-A- 0 867 486
- EP-A- 0 892 025
- EP-A- 0 985 716
- EP-A- 1 041 127
- US-A- 5 364 461

## Description

The present invention is directed to an ink for an ink jet printer and, more particularly, to ink compositions that are environmentally friendly, reliable, and fast drying for use in thermal ink jet printers for POS applications and check validation.

Thermal inkjet printers are well-known and have been extensively discussed elsewhere; see, e.g., Hewlett-Packard Journal, pp. 4-37 (May 1985); Hewlett-Packard Journal, pp. 6-56 (August 1988); Hewlett-Packard Journal, pp. 51-98 (October 1988); Hewlett-Packard Journal, pp. 64-102 (August 1992); and Hewlett-Packard Journal, pp. 6-97 (February 1994). Essentially, thermal ink jet printers use printheads that employ resistive heater elements to heat ink to boiling and thus propel the ink through an overlying orifice plate during an ink jet printing operation. Thermal ink jet printers are known (1) for their relatively fast throughput, similar to that of many laser jet printers, (2) for their relative inexpensiveness, lower than that of laser jet printers; and (3) for their ease of use and ease of print cartridge replacement.

Point-of-sale applications involve a variety of equipment, such as cash registers, credit card receipt printers, and the like. The typical print engine is a dot matrix impact printer or a direct thermal printer. Compared to ink jet printers, the former is well-known for its relatively noisiness, while the latter requires special paper.

Expansion of the utility of ink jet printers into point-of-sale (POS) applications is desired, due to the many advantages that ink jet offers over dot matrix impact printers and direct thermal printers, in particular, being much quieter than the former and not requiring special paper and lack of permanence upon exposure to heat and light, as is true of the latter. In addition, ink jet enables the use of color, which is not available with dot matrix impact printers nor direct thermal printers. However, there are several criteria that have to be met in order for thermal ink jet printers to find use in such applications.

First, the ink jet printer must be able to print receipts rapidly, thereby requiring high frequency printing, on the order of about 3 kHz (text). Second, due to the fact that the printer is used in public places, low toxicity is a requirement; ink compositions must be environmentally benign and non-toxic. Third, a print cartridge must be capable of printing on the order of several million characters before requiring changing, in order to minimize frequent cartridge changes. Fourth, the pen portion of the print cartridge is not likely to be capped during non-use, which means that the ink must be capable of long term decap, on the order of weeks or months. (Decap, as used herein, describes the ability of the pen to remain clear of plugs of dried ink in the nozzles.) Fifth, the ink must be fast drying. Previous inks were considered fast drying if they achieved drying times of 10 to 15 seconds; the drying time in such applications was dictated by the mechanics of the printer's print speed and placing one printed page on top of another. In POS applications, however, the ink must dry nearly instantaneously, since upon completion of printing a receipt, it is immediately handed to the customer and therefore must not smudge the customers fingers. A drying time of less than 300 milliseconds (msec) is required to meet this condition, more than 10 times faster than previous inks were required to achieve. Sixth, since the ink jet printer is used repeatedly in POS applications involving the public, all parts must be able to handle minimum servicing. Seventh, the print quality, which is on the order of 100 dots per inch (dpi) must be no worse than other printing technologies, such as dot matrix impact or direct thermal. Eighth, and finally, the resulting print must exhibit adequate optical density (OD), by which is meant that the OD must be at least 0.3 for readability (on paper).

The foregoing requirements suggest that a proven, mature technology be employed, in order to minimize printer down-time. That is to say, it is better to use an older, existing product that can be modified than to develop a new product that might take years to prove out.

A printhead that meets many of the foregoing requirements is disclosed and claimed in U.S. Patents 4,809,428; 4,500,895; and 4,509,062. Such a printhead employs a nickel orifice in combination with a glass (silica) substrate.

There are inks, for example, that are relatively fast drying, but are not designed for high frequency printing. Further, a problem that exists with the nickel orifice plate is that the inks developed for the foregoing printhead tend to puddle on the orifice plate, which interferes with printing crisp, clean images and lowers the overall system reliability.

EP 0 985 716 (Seiko Epson Corporation) discloses an ink composition comprising an organic solvent, a wetting agent, a dye and a surfactant which is a glycol ether surfactant.

EP 0 867 486 (Lexmark International, Inc.) discloses an ink composition comprising a penetrant, a co-solvent and a colourant.

In accordance with the present invention, an ink jet ink for thermal ink jet point-of-sale printers is provided, comprising:
(a) a vehicle comprising
   (i) from 7 to 10 wt% of a drying agent which is 1,2-hexanediol or 1,2-pentanediol or a mixture thereof,
   (ii) from 15 to 32 wt% 2-pyrrolidone, and
   (iii) from 15 to 37 wt% of at least one humectant,
(b) from 0.5 to 10 wt % of a dye; and
(c) from 0 to 3 wt% of at least one buffer, corrosion inhibitor, surfactant, biocide, polymer, pigment, or binder, or any mixture thereof,
(d) the balance being water;
wherein the amount of surfactant is less than 1 wt%.

In a preferred embodiment said vehicle comprises 25 wt% 2-pyrrolidone and 25 wt% or less of said humectant.

Further in accordance with the present invention, the ink jet ink is employed in combination with a printhead having a nickel orifice plate, through which droplets of ink are expelled onto a print medium.

Additionally in accordance with the present invention, a method is provided for reducing puddling on the nickel orifice plate, comprising providing the foregoing composition and jetting it through orifice openings in the nickel orifice plate.

The ink jet ink composition of the present invention is environmentally friendly, reliable, and fast drying, on the order of 300 msec and less. Further, the ink composition exhibits minimal puddling on the nickel orifice plate, leading to improved print quality.

A number of preferred embodiments of the invention will now be described with reference to the accompanying drawings, in which:
FIG. 1 is a side elevational view of a portion of a print chamber used in the practice of the present invention, in which ink is expelled through openings in an orifice plate;
FIG. 2 is a perspective view of a print cartridge that incorporates the orifice plate of FIG. 1; and
FIG. 2a is an enlarged plan view of the orifice plate shown in FIG. 2.

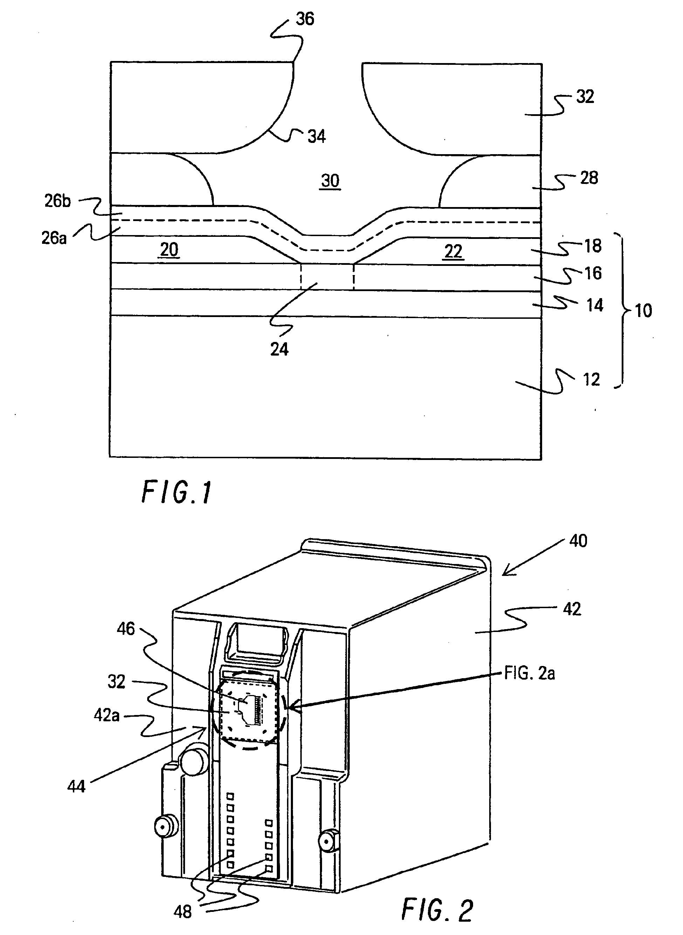

An example of a portion of an ink jet printhead is depicted in FIG. 1. A thin film resistor sub-structure, designated generally as 10, includes an underlying substrate 12, which is typically glass or silicon. The substrate 12 has a layer 14, such as silicon dioxide, SiO₂, thereon, and this surface insulating layer 14 is utilized to provide a dielectric barrier and heat sink between the substrate 12 and an overlying resistive layer 16, which may, for example comprise a tantalum aluminium alloy, TiAl. The resistive layer 16 is in turn covered by a top conductive layer 18 which may, for example, comprise aluminium, Al. However, the conductive layer 18 and the resistive layer 16 may both comprise materials other than the exemplary materials listed above. Similarly, it is not necessary that the surface insulation layer 14 be used at all, and instead the resistive layer may be deposited directly on certain types of substrate materials with dielectric and heat transfer characteristics suitable for directly receiving the desired resistive material. One such suitable substrate material is baria glass.

The top conductive layer 18 is appropriately masked with strips of photoresist (not shown), using conventional photolithographic processing techniques and then exposed to a metal etchant to remove all unprotected regions of the aluminum conductive layer 18. This step leaves intact a plurality of conductive traces (two such are shown, denoted 20 and 22, although a typical printhead structure contains a large plurality of such traces), which define a resistor length dimension. These traces serve to define and supply current to a corresponding plurality of heater resistors 24 in the area indicated.

Additional processing steps are followed, which result in the formation of a conformal inert passivation layer 26a, such as silicon nitride, Si₃N₄, which is deposited on the surface of the aluminum trace material 18. Thereafter, an outer protective layer 26b of highly inert silicon carbide, SiC, is deposited on the surface of the Si₃N₄ to complete the composite inner surface passivation layer 26.

Then, a much thicker outer barrier layer 28 is formed on the surface of the surface passivation layer 26. The outer barrier layer 28 comprises either a polymer layer such as the well known polymers Riston and Vacrel, available from DuPont de Nemours Company (Wilmington, DE) or electroformed nickel.

An ink reservoir region, or firing chamber, 30 is normally aligned with the previously formed resistive heater elements 24. The outer barrier layer 28 is in turn secured using a suitable adhesive (or using the outer barrier layer 28 as its own adhesive) to an outer orifice or nozzle plate 32 with orifice openings 36 defined using known orifice-forming techniques. These orifice openings 36 are typically defined by a plurality of convergent outer surfaces 34 which terminate at a corresponding plurality of output ink ejection orifice openings. The orifice plate 32 comprises nickel, preferably electroformed nickel, although other materials, such as plastics or other photodefinable polymers may be used.

The above-described nickel nozzle plate 32 and its associated resistor heater 24 and thin film structure 10 are described in greater detail in U.S. Patent 4,809,428, the contents of which are incorporated herein by reference.

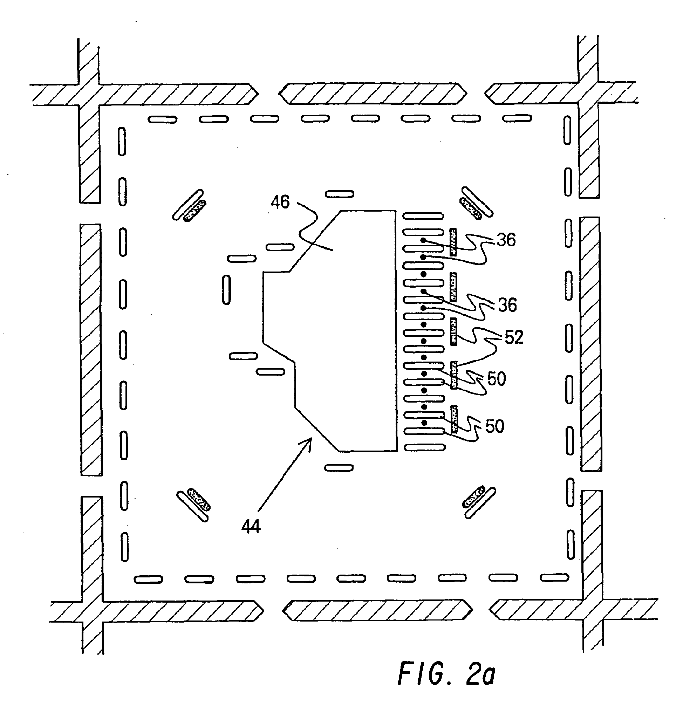

FIG. 2 is a perspective view of a print cartridge 40 comprising a housing 42 in which a reservoir of ink (not shown) is contained. A printhead 44 is formed on one side 42a of the housing 42 and comprises the orifice plate 32, a plurality of orifice openings 36 therein, and a manifold 46 for supplying ink to each firing chamber 30. Also formed on the surface 42a is the substrate 12, with a plurality of electrical interconnects 48 for making contact between the print cartridge 40 and a printer driver (not shown) in a printer (not shown). In operation, the print cartridge 40 is oriented so that the surface 42a is parallel to a print medium (not shown) and separated a short distance therefrom, as is well-known.

FIG. 2a is an enlargement of a portion of FIG. 2, depicting the printhead 44 in greater detail. The orifice openings 36 are formed around a pillar of photoresist with a carefully controlled overplating process, which helps determine the appropriate nozzle diameter to control drop size and velocity. On each side of each orifice opening 36 are barriers 50 that, when the orifice plate is bonded to the outer barrier layer 28, form walls down to the surface of the substrate 12. These barriers help inhibit adjacent orifice openings from ejecting spurious drops of ink when an orifice opening is energized by preventing direct fluid flow from one orifice opening are to another.

The manifold 46 rises above an ink fill hole (not shown) in the underlying thin film substrate 12 and extends to the orifice openings 36, allowing ink to flow easily for maximum print rate. Slots 52 are positioned just outside the ends of the barriers 50 to act as fluid flow shock absorbers, preventing fluid flow pulses from ejecting ink from other orifice openings 36 and venting any gas bubbles that might be ingested during collapse of the main vapor bubble. Ink is expelled through the various orifice openings 36 in a manner so as to form alphanumeric characters and area fill, as needed. Additional structural features are shown in FIGS. 2 and 2a, but these are not germane to the nickel orifice plate 32 that is the focus here. Further details of this printhead 44 are found in Gary L. Siewell et al, "The ThinkJet Orifice Plate: A Part With Many Functions", Hewlett-Packard Journal, pp. 33-37 (May 1985).

In accordance with the present invention, an ink jet ink composition is provided that has an exceedingly fast dry time and further evidences reduced puddling when used with a nickel orifice plate 32, such as described above and shown in the Figures.

The ink composition comprises a vehicle and at least one dye. The vehicle comprises a range of about 10 to 90 wt% organic co-solvents, based on the total ink composition, and the balance water. In particular, the ink comprises the following formulation:

| | |
|---|---|
| 1,2-hexanediol and/or 1,2-pentanediol | 7-10 wt% |
| 2-pyrrolidone | 15-32 wt% |
| humectant(s) | 15-37 wt% |
| dye | 0.5-10 wt% |
| other components | 0-3 wt % |
| water | balance, |

The 1,2-hexanediol and/or 1,2-pentanediol is used as a drying agent, and is more effective than simply adding increased amounts of surfactants. While it is known that surfactants can decrease dry time of the ink, surfactants can also enhance the toxicity of other chemical components and exacerbate puddling of the ink on the orifice plate.

The humectant comprises any of the humectants commonly employed in ink jet printing. Organic solvents suitably employed in the present invention include, but are not limited to, glycols, such as ethylene glycol, diethylene glycol, triethylene glycol and tetraethylene glycol; glycerol and related derivatives such as polyethoxylated glycerols; lactams, such as N-methyl pyrrolidone; lactones, such as butyrolactone; alkanolamines, such as diethanolamine and triethanolamine; diols such as 1,2-propanediol, 1,3-propanediol, 1,2-butanediol, 2,3-butanediol, 1,4-butanediol, and hexylene glycol (also known as 2-methyl-2,4-pentanediol); other isomers of pentanediol and hexanediol such as 1,5-pentanediol and 1,6-hexanediol; triols, such as 1,2,6-hexanetriol; mono- and di-glycol ethers, such as ethylene glycol monobutyl ether; imidazoles, such as 1,3-dimethyl-2-imidazolidinone; sulfones, such as dimethylsulfone, tetramethylene sulfone, and 2,2'-sulfonyldiethanol; organosulfoxides, such as methylsulfoxide; organosulfides, such as 2,2'-thiodiethanol; trimethylolpropane; triethylolethane; urea and its derivatives; and the like and mixtures thereof. As mentioned above, the total of 2-pyrrolidone and humectant(s) must be greater than 0.

The dye is any water- or organic-soluble black, red, blue, green, orange, pink, yellow or other color. Examples include, but are not limited to, (1) black: Food Black 2, Carta Black; direct black 168, carboxylated Food Black 286, and carboxylated Food Black 287; (2) red: Direct Red 9, Direct Red 227, and Acid Red 52; (3) yellow: Acid Yellow 23 and Direct Yellow 86; (4) blue: Acid Blue 9, Acid Blue 185, Direct Blue 86, Direct Blue 199, and FD&C Blue 1; and (5) orange: Acid Orange 7.

These dyes are all anionic dyes, and are ordinarily supplied from the dye maker with sodium counterions. The sodium counterions may be replaced with lithium, potassium, tetramethyl amine (tetramethyl ammonium), triethanol amine (triethanol ammonium), or diethylene amine cations, as disclosed, for example, in U.S. Patents 4,685,968; 4,761,180; 4,786,327; and 4,810,292. The counterion replacement may be performed by reverse osmosis, such as disclosed and claimed in U.S. Patent 4,685,968, or by ion exchange, such as disclosed and claimed in U.S. Patent 4,786,327.

By using surface active solvents such as 1,2-pentanediol and 1,2-hexanediol, a combination of performance is achieved, primarily including proper dry time ≤300 msec), low puddling on the nickel orifice plate, and good frequency response (on the order of about 3 kHz). Finally, by using the 1,2-pentanediol and/or 1,2-hexanediol as the predominant drying agent, typical toxicity issues associated with many common surfactants are avoided. Examples of such common surfactants include the TERGI-TOLS, SILWETS, DOWFAXES, DOWANOLS, AND SURFYNOLS. On the other hand, small amounts of such surfactants, less than about 1 wt%, may be included in the ink to inhibit corrosion of the nickel orifice plate. In order to achieve the dry times of the present compositions, however, larger amounts of such surfactants would be required, and such larger amounts would be sufficient to exacerbate toxicity issues and puddling, both of which are undesirable.

Up to a total of about 3 wt% of other components, including buffers, corrosion inhibitors, surfactants, biocides, polymers, pigments, and binders, based on the total ink composition, may be included in the ink. An example of a buffer is 4-morpholine-propanesulfonic acid (MOPS), which is used within the range of about 0.1 to 1 wt%.

The ink composition of the present invention preferably comprises:

| | |
|---|---|
| 1,2-hexanediol | about 6 wt% |
| 2-pyrrolidone | about 25 wt% |
| diethylene glycol or | |
| ethylene glycol | about 25 wt% |
| dye | about 2 to 6 wt% |
| water | balance. |

### EXAMPLES

### Example 1.

An ink composition was prepared in accordance with the present invention comprising:

| | |
|---|---|
| 1,2-hexanediol | 9 wt% |
| 2-pyrrolidone | 32 wt% |
| ethylene glycol | 22 wt% |
| Food Black 2, TMA salt | 4.1 wt% |
| MOPS | 0.3 wt% |
| water | balance. |

The ink composition was loaded into the reservoir of a print cartridge provided with a reticulated foam and having a printhead such as shown in FIG. 1, with a nickel orifice plate. The print cartridge was placed in a POS ink jet printer operating at a frequency of 3 kHz. The print medium was thermal mechanical pulp receipt paper.

The pen was printed to ink-out (approximately 5 million 9-point font characters. Minimal ink puddling was present on the orifice plate, and no ink puddle reached the pen electrical interconnect below the nozzle plate. The resulting dry time was measured by mounting a small horsehair brush 1.0 inches behind the pen such that the brush was in contact with the printed medium. The pen was then printed with a carriage speed of 5 inches per second. No ink smearing was present under these conditions, and the dry time was determined to be 200 msec. The print quality during the life of the pen was nearly constant and equivalent to typical dot matrix printer output. The optical density was measured on a calibrated Macbeth optical densitometer, model # RD 917, and found to be 0.55.

### Example 2.

Another ink composition was prepared in accordance with the present invention comprising:

| | |
|---|---|
| 1,2-hexanediol | 9 wt% |
| 2-pyrrolidone | 18 wt% |
| ethylene glycol | 22 wt% |
| 1,3-propanediol | 15 wt% |
| Acid Blue 9, Na salt | 2.8 wt% |
| MOPS | 0.3 wt% |
| water | balance. |

The ink composition was printed as in Example 1 and the dry time was measured. The dry time was determined to be ~200 msec.

### Example 3.

Yet another ink composition was prepared in accordance with the present invention comprising:

| | |
|---|---|
| 1,2-hexanediol | 7 wt% |
| 2-pyrrolidone | 15 wt% |
| trimethylolpropane | 15 wt% |

| | |
|---|---|
| ethylene glycol | 22 wt% |
| Acid Red 52, Na salt | 3.5 wt% |
| MOPS | 0.3 wt% |
| Zonyl FSA | 0.005 wt% |
| water | balance. |

The ink composition was printed as in Example 1 and the dry time was measured. The dry time was determined to be ~300 msec.

### Example 4.

Still another ink composition was prepared in accordance with the present invention comprising:

| | |
|---|---|
| 1,2-hexanediol | 10 wt% |
| 2-pyrrolidone | 15 wt% |
| ethylene glycol | 15 wt% |
| Acid Red 52, Na salt | 3.5 wt% |
| MOPS | 0.3 wt% |
| Zonyl FSA | 0.005 wt% |
| water | balance. |

The ink composition was printed as in Example 1 and the dry time was measured. The dry time was determined to be ~100 msec.

The ink jet ink disclosed herein is expected to find use in point-of-sale printers and check validation applications.

## Claims

1. An ink jet ink for thermal ink jet printers comprising:
(a) a vehicle comprising
(i) from 7 to 10 wt% of a drying agent which is 1,2-hexanediol or 1,2-pentanediol or a mixture thereof,
(ii) from 15 to 32 wt% 2-pyrrolidone, and
(iii) from 15 to 37 wt% of at least one humectant,
(b) from 0.5 to 10 wt% of a dye; and
(c) from 0 to 3 wt% of at least one buffer, corrosion inhibitor, surfactant, biocide, polymer, pigment, or binder, or any mixture thereof,
(d) the balance being water;
wherein the amount of surfactant is less than 1 wt%

2. An ink jet ink as claimed in claim 1 wherein said vehicle comprises 25 wt% 2-pyrrolidone, and 25 wt% or less of said humectant.

3. An ink jet ink as claimed in any preceding claim, wherein said humectant is a glycol; glycerol or a related derivatives; a lactam; a lactone; an alkanolamine; a diol; an isomer of pentanediol or hexanediol; a triol; a mono- or di-glycol ether; an imidazole; a sulfone; an organosulfoxide; an organosulfide; a tri-methylolpropane; triethylolethane; or urea or its derivatives; or any mixture thereof.

4. An ink jet ink as claimed in claim 3 wherein humectant is ethylene glycol, diethylene glycol, triethylene glycol, tetraethylene glycol, a polyethoxylated glycerol, N-methyl pyrrolidone, butyrolactone, diethanolamine, triethanolamine, 1,2-propanediol, 1,3-propanediol, 1,2-butanediol, 2,3-butanediol, 1,4-butanediol, hexylene glycol, 1,5-pentanediol, 1,6-hexanediol, 1,2,6-hexanetriol, ethylene glycol monobutyl ether, 1,3-dimethyl-2-imid-azolidinone, dimethylsulfone, tetramethylene sulfone, 2,2'-sulfonyldiethanol, methylsulfoxide, 2,2'-thiodiethanol, or any mixture thereof.

5. A method for reducing puddling on an orifice plate (32) in a printhead portion (44) of a print cartridge (40) employed in a thermal ink jet printer said method comprising:
(a) providing an ink as claimed in any preceding claim and
(b) jetting said ink through orifice openings (36) in said orifice plate (32) onto a print medium.

## Patentansprüche

1. Eine Tintenstrahltinte für thermische Tintenstrahldrucker, mit folgenden Merkmalen:
(a) einem Trägermittel mit
(i) 7 bis 10 Gew.-% eines Trocknungsmittels, das 1,2-Hexandiol oder 1,2-Pentandiol oder ein Gemisch derselben ist,
(ii) 15 bis 32 Gew.-% 2-Pyrrolidon und
(iii) 15 bis 37 Gew.-% von zumindest einem Feuchthaltemittel,
(b) 0,5 bis 10 Gew.-% eines Farbstoffs; und
(c) 0 bis 3 Gew.-% von zumindest eines Puffers, Korrosionshemmstoffs, oberflächenaktiven Mittels, Biozids, Polymers, Pigments oder Bindemittels oder irgendeines Gemischs derselben,
(d) wobei der Rest Wasser ist;
wobei die Menge an oberflächenaktivem Mittel geringer als 1 Gew.-% ist.

2. Eine Tintenstrahltinte gemäß Anspruch 1, bei der das Trägermittel 25 Gew.-% 2-Pyrrolidon und 25 Gew.-% oder weniger des Feuchthaltemittels aufweist.

3. Eine Tintenstrahltinte gemäß einem der vorhergehenden Ansprüche, bei der das Feuchthaltemittel ein Glykol; Glycerol oder verwandte Derivate; ein Lactam; ein Lacton; ein Alkanolamin; ein Diol; ein Isomer von Pentandiol oder Hexandiol; ein Triol; ein Mono- oder Di-Glykolether; ein Imidazol; ein Sulfon; ein Organosulfoxid; ein Organosulfid; ein TriMethylolpropan; Triethylolethan; oder Harnstoff oder die Derivate desselben; oder irgendein Gemisch derselben ist.

4. Eine Tintenstrahltinte gemäß Anspruch 3, bei der das Feuchthaltemittel Ethylenglykol, Diethylenglykol, Triethylenglykol, Tetraethylenglykol, ein polyethoxyliertes Glycerol, N-Methyl-Pyrrolidon, Butyrolacton, Diethanolamin, Triethanolamin, 1,2-Propandiol, 1,3-Propandiol, 1,2-Butandiol, 2,3-Butandiol, 1,4-Butandiol, Hexylenglykol, 1,5-Pentandiol, 1,6-Hexandiol, 1,2,6-Hexantriol, Ethylenglykolmonobutylether, 1,3-Dimethyl-2-imidazolidinon, Dimethylsulfon, Tetramethylensulfon, 2,2'-Sulfonyldiethanol, Methylsulfoxid, 2,2'-Thiodiethanol oder irgendein Gemisch derselben ist.

5. Ein Verfahren zum Vermindern einer Pfützenbildung an einer Düsenplatte (32) in einem Druckkopfabschnitt (44) einer Druckkassette (40), die bei einem thermischen Tintenstrahldrucker eingesetzt wird, wobei das Verfahren folgende Schritte aufweist:
(a) Bereitstellen einer Tinte gemäß einem der vorhergehenden Ansprüche und
(b) Ausspritzen der Tinte durch Düsenöffnungen (36) in der Düsenplatte (32) auf ein Druckmedium.

## Revendications

1. Encre pour imprimantes thermiques à jeL d'encre comprenant :
(a) un véhicule comprenant
(i) de 7 à 10 % en poids d'un agent séchant qui est un 1,2-hexanediol ou un 1,2-pentanediol ou un mélange de ceux-ci,
(ii) de 15 à 32 % en poids de 2-pyrrolidone, et
(iii) de 15 à 37 % en poids d'au moins un humidifiant,
(b) de 0,5 à 10 % en poids d'un colorant ; et
(c) de 0 à 3 % en poids d'au moins un tampon, inhibiteur de corrosion, tensioactif, biocide, polymère, pigment, ou liant, ou tout mélange de ceux-ci,
(d) le reste étant de l'eau ;
dans laquelle la quantité de tensioactif est inférieure à 1 % en poids.

2. Encre pour technologie à jet d'encre selon la revendication 1, dans laquelle ledit véhicule comprend 25 % en poids de 2-pyrrolidone, et 25 % en poids dudit humidifiant.

3. Encre pour technologie à jet d'encre selon l'une quelconque des revendications précédentes, dans laquelle ledit humidifiant est un glycol ; un glycérol ou des dérivés apparentés ; un lactame ; une lactone ; une alcanolamine ; un diol ; un isomère de pentanediol ou d'hexanediol ; un triol ; un éther de mono- ou de di-glycol ; un imidazole ; une sulfone ; un organo-sulfoxyde ; un organosulfure ; un tri-méthylolpropane ; un triéthyloléthane ; ou l'urée ou ses dérivés ; ou un mélange quelconque de ceux-ci.

4. Encre pour technologie à jet d'encre selon la revendication 3, dans laquelle ledit humidifiant est l'éthylène glycol, le diéthylène glycol, le triéthylène glycol, le tétraéthylène glycol, un glycérol polyéthoxylé, la N-méthylpyrrolidone, la butyrolactone, la diéthanolamine, la triéthanolamine, le 1,2-propanediol, le 1,3-propanediol, le 1,2-butanediol, le 2,3-butanediol, le 1, 4-butanediol, l'hexylène glycol, le 1,5-pentanediol, le 1,6-hexanediol, le 1, 2, 6-hexanetriol, l'éther monobutylique de l'éthylène glycol, la 1,3-diméthyl-2-imidazolidinone, la diméthylsulfone, la tétraméthylènesulfone, le 2,2'-sulfonyldiéthanol, le méthylsulfoxyde, le 2,2'-thiodiéthanol, ou un mélange quelconque de ceux-ci.

5. Procédé pour réduire l'accumulation d'encre sur une plaque à orifices (32) dans une partie de tête d'impression (44) d'une cartouche d'impression (40) utilisée dans une imprimante thermique à jet d'encre, ledit procédé comprenant :
(a) l'utilisation d'une encre selon l'une quelconque des revendications précédentes et
(b) l'éjection de ladite encre par les orifices (36) de ladite plaque à orifices (32) sur un support d'impression.
